# EUROPÄISCHE PATENTSCHRIFT

(11) **EP 1 243 066 B1**
(45) Veröffentlichungstag und Bekanntmachung des Hinweises auf die Patenterteilung: **16.06.2004**
(21) Anmeldenummer: 00983345.0
(22) Anmeldetag: 18.12.2000
(51) Int. Cl.: H02M 7/5387

(54) **HOCHSPANNUNGSWANDLER**
HIGH-VOLTAGE TRANSFORMER
TRANSFORMATEUR HAUTE TENSION

(30) Priorität: 20.12.1999 DE 19961541
(43) Veröffentlichungstag der Anmeldung: 25.09.2002
(73) Patentinhaber: MAGNET-MOTOR GESELLSCHAFT FÜR MAGNETMOTORISCHE TECHNIK MBH, 82319 Starnberg (DE)
(72) Erfinder: BIEBACH, Jens, 82131 Gauting (DE)
(74) Vertreter: Klunker . Schmitt-Nilson . Hirsch
(86) Internationale Anmeldenummer: PCT/EP2000/012907
(87) Internationale Veröffentlichungsnummer: WO 2001/047097

(56) Entgegenhaltungen:
- EP-A- 0 595 232
- DE-A- 4 116 871

## Beschreibung

Die Erfindung betrifft einen Hochspannungswandler zum Umsetzen einer von einer Gleichspannungsquelle bereitgestellten ersten, relativ niedrigen Gleichspannung in eine zweite, relativ hohe Gleichspannung. Ein solcher Hochspannungswandler läßt sich z.B. dazu einsetzen, in kurzer Zeit einen Kondensator hoher Kapazität aufzuladen.

Hochspannungswandler sind in verschiedenen Ausführungsformen bekannt. Wesentliche Elemente eines Hochspannungswandlers sind ein an die Gleichspannungsquelle angeschlossener Wechselrichter, üblicherweise durch eine Anordnung aus leistungselektronischen Schaltern gebildet, ein Transformator mit Primärwicklung und Sekundärwicklung auf einem Transformatorkern, eine Schaltersteuerung zur Ansteuerung des Wechselrichters, ein Ausgangsgleichrichter, der an die Sekundärwicklung des Transformators angeschlossen ist, und ein an den Ausgangsgleichrichter angeschlossenes Filter.

Für fast sämtliche Verwendungszwecke eines solchen Hochspannungswandlers wird üblicherweise eine möglichst kompakte Bauweise des Wandlers angestrebt. Ausschlaggebend für das Bauvolumen des Hochspannungswandlers ist in erster Linie die bauliche Größe des Transformators. Wesentliches Element bei der Dimensionierung eines für Hochspannungsbetrieb ausgelegten Transformators sind die erforderlichen Isolierungen zwischen den Bestandteilen des Transformators, nämlich der Primärwicklung bzw. den Primärwicklungen, dem Transformatorkern und der Sekundärwicklung bzw. den Sekundärwicklungen.

Betrachtet man z.B. einen herkömmlichen Transformator, auf dessen Sekundärseite eine Spannung von 40 kV gegen Erde entsteht, so muß zwischen der Stelle der Sekundärwicklung, an der die Spannung von 40 kV auftritt, und der dieser Stelle benachbarten Stelle, die Erd- oder Massepotenzial aufweist, z.B. dem auf Erdpotenzial liegenden Transformatorkern, eine für 40 kV ausgelegte Isolierung vorhanden sein. Dies setzt der kompakten geometrischen Dimensionierung des Transformators enge Grenzen.

Der Erfindung liegt die Aufgabe zugrunde, einen Hochspannungswandler anzugeben, bei dem sich der Aufbau des Transformators im Vergleich zu bekannten Hochspannungswandlern erheblich vereinfachen läßt.

Gelöst wird diese Aufgabe erfindungsgemäß durch die Merkmale des Anspruchs 1 gelöst.

Die Ausbildung "mehrerer Unterbrechuugsstellen" im Transformatorkern schafft zwei potenzialmäßig vollständig voneinander isolierte Abschnitte des Transformatorkerns. "Mehrere" bedeutet, daß für die Schaffung von zwei potentialmäßig getrennten Abschnitten mindestens zwei Unterbrechungen notwendig sind.

Mit der Auftrennung des Transformatorkerns in mehrere Abschnitte geht eine vollständige räumliche Trennung des Transformators in Primärsystem und Sekundärsystem einher. Durch diese räumliche Trennung kann die Isolierung zwischen der Primärwicklung und dem korrespondierenden Kernabschnitten bzw. der Sekundärwicklung und den korrespondierenden Kernabschnitten einfacher ausgeführt werden. Durch die erfindungsgemäße Auftrennung des Transformators in voneinander isolierte Primär- und Sekundärsysteme ergibt sich eine Erhöhung der Streuinduktivität bei gleichzeitiger Abnahme der Hauptinduktivität. Dieser an sich nicht unbedingt günstige Effekt läßt sich bei entsprechender Auslegung der an das Primärsystem angeschlossenen Wechselrichteranordnung bzw. des an das Sekundärsystem angeschlossenen Ausgangsgleichrichters für eine Optimierung des Betriebs des Hochspannungswandlers nutzen.

Der erfindungsgemäße Hochspannungswandler läßt sich in Netzteilen mit Gleichspannungszwischenkreis einsetzen.

In einer speziellen Ausführungsform der Erfindung ist zwischen Primärsystem und Sekundärsystem ein durchgehender Isolator angeordnet. Ausgehend von dieser grundsätzlichen Maßnahme kann man dann die Primärsysteme einer Mehrzahl von Transformatoren zusammenfassen, insbesondere in einem gemeinsamen Gehäuse unterbringen, welches dann die Abschnitte der Transformatorkerne der einzelnen Transformatoren und die dazugehörigen Primärwicklungen enthält. Gleiches kann für das Sekundärsystem vorgesehen werden. Man kann Primärsysteme und Sekundärsysteme in getrennten Gehäusen oder aber auch in einem gemeinsamen Gehäuse unterbringen. Durch geeignete Anordnung oder äußere Beschaltung können die einzelnen Abschnitte des Transformatorkerns bzw. der Transformatorkerne derart in ihrem Potenzial gesteuert werden, daß sich zwischen den Potenzialen jeweils einer Wicklung und dem Potenzial des dieser Wicklung zugeordneten Kernabschnitts eine möglichst geringe maximale Potenzialdifferenzen ergeben. Der sich zwischen den Kernabschnitten befindliche Isolator muß dann die unterschiedlichen Potenziale der Kernabschnitte gegeneinander isolieren. Dabei kann man einzelne Kernabschnitte der Transformatoren mit bestimmten Schaltungsteilen (des oder der Wechselrichter bzw. des oder der Ausgangsgleichrichter) derart verschalten, daß die Störemission des Hochspannungswandler minimiert wird.

Erfindungsgemäß wird die Energie in dem erfindungsgemäßen Hochspannungswandler ohne Zwischenspeicherung im Transformator nach dem Flußwandlerprinzip von dem Primär- auf das Sekundärsystem übertragen, wobei dem Ausgangsgleichrichter eine Speicherdrossel nachgeschaltet ist, an die sich ein Ausgangskondensator anschließt. Es kann auch in jedem Ausgangszweig des Ausgangsgleichrichters eine Speicherdrossel vorgesehen werden, um die Spannungsbeanspruchung der einzelnen Drossel zu reduzieren.

Im folgenden soll zu speziellen vorteilhaften Ausgestaltungen der Erfindung Stellung genommen werden, wobei diese Ausgestaltungen jeweils für sich als auch in jeder für den Fachmann ersichtlichen, zweckmäßigen Kombination eingesetzt werden können.

Das erfindungsgemäße Konzept der Auftrennung des Transformatorkerns in mehrere Abschnitte, der elektrischen Isolierung dieser Abschnitte und der damit einhergehenden Schaffung eines Primärsystems und eines Sekundärsystems ermöglicht eine Vielfalt von Ausgestaltungen eines Hochspannungswandlers. In an sich bekannter Weise können einem Transformator ein oder mehrere Primärspulen bzw. Primärspulenabschnitte zugeordnet sein, ebenso können ein oder mehrere Sekundärspulen bzw. Sekundärspulenabschnitte vorhanden sein. Der Hochspannungswandler kann ein oder mehrere Transformatoren aufweisen.

Grundsätzlich möglich ist die Parallelschaltung der Primärwicklungen mehrerer Transformatoren, wobei diese Primärwicklungen dann von einem gemeinsamen Wechselrichter aus der Gleichspannungsquelle gespeist werden. Möglich ist aber auch eine getrennte Ansteuerung der Primärwicklung jedes Transformators mit einem eigenen Wechselrichter. Außerdem können die Primärwicklungen in Reihe geschaltet werden.

Im Sekundärsystem können die Sekundärwicklungen mehrerer Transformatoren in Reihe geschaltet werden, wobei jeder Sekundärwicklung ein eigener Ausgangsgleichrichter mit eigenem oder mit gemeinsamen Ausgangsfilter zugeordnet ist. Es können aber auch die Sekundärwicklungen des Hochspannungswandlers in Reihe geschaltet werden, wo dann an diese Reihenschaltung ein gemeinsamer Ausgangsgleichrichter angeschlossen ist.

Im folgenden sollen zunächst einige Schaltungsvarianten für den Anschluß des Primärsystems bzw. der Primärsysteme für eine spezielle Ausführungsform des erfindungsgemäßen Hochspannungswandlers erläutert werden.

Bevorzugt wird der Transformator bzw. die Zusammenschaltung von Transformatoren primärseitig mit einem Anschluß an den Mittelanschluß einer aus rückwärts nicht sperrenden leistungselektronischen Schaltern bestehenden Halbbrücke und mit dem anderen Anschluß an einen Kondensator angeschlossen.

In einer alternativen Ausführungsform ist der Transformator primärseitig mit jedem Anschluß an einen Mittelanschluß einer aus rückwärts nicht sperrenden leistungselektronischen Schaltern angeschlossen. Die leistungselektronischen Schalter bestehen insbesondere aus Transistoren. Entweder besitzen diese Transistoren eine hybrid integrierte oder parasitäre Diode, oder die Diode wird als diskretes Bauelement antiparallel geschaltet. Bekanntlich sind solche Leistungstransistoren mit parasitären Kapazitäten behaftet. Die oben bereits erwähnte erhöhte Streuinduktivität des Transformators in dem erfindungsgemäßen Hochspannungsgenerator kann bevorzugt mit den parasitären Kapazitäten der Schalttransistoren derart abgestimmt werden, daß man einen resonanten Betrieb für die Schaltvorgänge des Wechselrichters erhält. Gegebenenfalls muß die Kapazität mittels diskretem Kondensator erhöht werden. Man kann mit einem solchen resonanten Betrieb die Schaltverluste erheblich reduzieren und die elektromagnetische Verträglichkeit der Schaltung verbessern. Durch die Abstimmung der Streuinduktivität des Transformators mit den parasitären Kapazitäten der Schalttransformatoren kann erreicht werden, daß vor dem Zuschalten des Transistors, der den Strom übernehmen soll, die parallelen Kapazitäten vollständig umgeladen werden, so daß die Schaltverluste minimiert werden.

In dem Sekundärsystem des Transformators in dem erfindungsgemäßen Hochspannungswandler werden bevorzugt Maßnahmen getroffen, um die Spannungsfestigkeit des Ausgangsgleichrichters zu gewährleisten. Zu diesem Zweck werden bei Bedarf pro Zweig jedes Ausgangsgleichrichters mehrere Dioden in Reihe geschaltet. Insbesondere sind zu jeder einzelnen Diode des Ausgangsgleichrichters jeweils eine Kapazität und ein Widerstand parallel geschaltet. Hierdurch werden die Dioden bezüglich der zu sperrenden Spannung dynamisch und statisch symmetriert. Diese zu den Dioden im Ausgangsgleichrichter parallelgeschalteten Kondensatoren werden bevorzugt mit der Streuinduktivität des Transformators so abgestimmt, daß ein Reihenresonanzkreis gebildet wird, dessen Eigenfrequenz etwas kleiner ist als die von der Schaltersteuerung vorgegebene Schaltfrequenz des Hochspannungswandlers.

Wie oben erwähnt, ergibt sich durch die erfindungsgemäße Auftrennung des Transformators in ein Primärsystem und ein davon isoliertes Sekundärsystem eine Vergrößerung der Streuinduktivität, und man kann diese Streuinduktivität vorteilhaft nutzen. Gleichzeitig wird die Hauptinduktivität des Transformators verringert. Ist diese Verringerung der Hauptinduktivität so groß, so daß das angestrebte Betriebsverhalten des Hochspannungswandlers nicht erzielbar ist, so kann man in einer bevorzugten Ausgestaltung der Erfindung bei einem Hochspannungswandler mit mehreren Primärwicklungen innerhalb eines Transformators die Primärwicklungen parallel oder in Reihe schalten, wobei von diesen Primärwicklungen eine oder mehrere Sekundärwicklungen eingeschlossen sein können. Durch diese sogenannte Schachtelung wird eine Erhöhung der Hauptinduktivität des Transformators erreicht.

Entsprechend zu der obigen Maßnahme ist in einer speziellen Ausführungsform eines Hochspannungswandlers mit mehreren Sekundärwicklungen vorgesehen, daß diese parallel oder in Reihe geschaltet sind, wobei eine oder mehrere Primärwicklungen einbezogen sind. Hierbei besteht auch die Möglichkeit, die Wicklungen des Sekundärsystems einzeln oder mit gemeinsamer Anzapfung herauszuführen, um mehrere Sekundärspannungen - auch vollständig isolierte Sekundärspannungen - verfügbar zu machen.

Durch die erfindungsgemäße Auftrennung des Transformators in einem Hochspannungswandler mit zwischen Primärsystem und Sekundärsystem eingefügtem Isolator oder einzelnen Isolatorabschnitten ergibt sich die Möglichkeit, den einschlägigen Vorschriften bezüglich der Isolationsgestaltung mit reduziertem technischen Aufwand zu entsprechen.

An sich bekannte Isoliersysteme können um die Abschnitte des Isolators zwischen Primärsystem und Sekundärsystem bei dem erfindungsgemäßen Hochspannungswandler erweitert werden. Insbesondere können abhängig von der geforderten Spannungsfestigkeit zwischen primärseitigen und sekundärseitigen Kernabschnitten des Transformators und den Wicklungen des Transformators die Dicke, die Ausdehnung und die Kantenform der Unterbrechungen des Transformatorkerns ausgeführt werden.

Insbesondere können die Isolatorabschnitte aus mehreren verschiedenen Materialien bestehen. Diese Materialien sind so gewählt, daß sie in ihrer Kombination einerseits die geforderten Isoliereigenschaften gewährleisten, andererseits spezielle mechanische Funktionen übernehmen.

Hierbei ist speziell daran gedacht, die Isolatorabschnitte des Transformators als Bestandteile eines Gehäuses auszuführen, welches das Primärsystem und/oder das Sekundärsystem einschließt. Bei Bedarf können die Schaltungsteile also hermetisch gegeneinander abgeschlossen werden. Dabei kann dann der Isolator, der Primärsystem und Sekundärsystem trennt, die Gefässwand bilden. Die primärseitigen und sekundärseitigen, durch eine Wand getrennten Gehäusebereiche können unabhängig voneinander mit Gas, einer Flüssigkeit, einem Pulver oder dergleichen gefüllt werden, um beispielsweise die Kühlung und/oder Isolation der in diesen Gehäusebereichen befindlichen Schaltungsteile zu verbessern.

Besonders günstig läßt sich die Schaltersteuerung mit Hilfe eines Phasenregelkreises ausbilden, dessen erstem Eingang ein von dem zeitlichen Verlauf des primären Transformatorstroms abgeleitetes Stromdetektorsignal zugeführt, und dessen zweitem Eingang über ein Verzögerungsglied das Ausgangssignal des Phasenregelkreises zugeführt wird, wobei die leistungselektronischen Schalter mit dem Ausgangssignal und dem komplementären Ausgangssignal des Phasenregelkreises angesteuert werden.

Der Phasenregelkreis besteht in an sich bekannter Weise aus einem Phasendetektor oder Phasenvergleicher, einem Tiefpaßfilter und einem dem Tiefpaßfilter nachgeschalteten spannungsgesteuerten Oszillator (VCO). Das Stromdetektorsignal wird von einem Stromsensor im Primärwicklungskreis des Transformators erfaßt.

Der Phasenregelkreis sorgt für eine ständige Nachregelung des von der Steuerschaltung zur Ansteuerung der leistungselektronischen Schalter erzeugten Ansteuersignals. Wegen des Verzögerungsglieds zwischen Ausgang und Eingang des Phasenregelkreises sorgen die direkt am Ausgang des spannungsgesteuerten Oszillators des Phasenregelkreises abgenommenen Ansteuersignale für die leistungselektronischen Schalter dafür, daß diese Schalter stets kurz vor dem Stromnulldurchgang des Schalterstroms umgeschaltet werden. Damit ist gewährleistet, daß der Wechselrichter induktiv arbeitet und sich ein verlustloses Umschalten realisieren läßt. Dieses verlustlose Umschalten erreicht man dadurch, daß man die Verzögerung so einstellt, daß die im Abschaltmoment des Wechselrichters in der Streuinduktivität gespeicherte Energie groß genug ist, um die parasitären Kapazitäten der leistungselektronischen Schalter vollständig umzuladen. Danach läuft der Strom über die antiparallele Diode des neu einzuschaltenden Transistors frei, und die Spannung über diesem Transistor wird auf die Diodenflußspannung geklemmt. Damit kann der entsprechende Schalter ohne Verluste eingeschaltet werden. Das Ansteuern der Schalter erfolgt dann mit komplementären, also gegeneinander um 180° verschobenen Signalen, wobei durch Totzeiten zwischen den Flanken der Ansteuersignale der leistungselektronischen Schalter garantiert wird, daß Kurzschlüsse im Wechselrichter vermieden werden, und das gewünschte Umladen der Transistorkapazitäten vollständig möglich ist.

Bevorzugt erfolgt die Einstellung der oberen und der unteren Eckfrequenz des in dem Phasenregelkreis befindlichen spannungsgesteuerten Oszillators in der Weise, daß bei geeigneter unterer Eckfrequenz der in der Startphase auftretende dreieckförmige Stromverlauf einen Maximalstrom nicht übersteigt. Die obere Eckfrequenz ist derart gewählt, daß die Taktfrequenz des Wechselrichters immer größer ist als die Eigenfrequenz des Wechselrichters, die durch die Streuinduktivität des Transformators und die Kondensatoren, die parallel zum Ausgangsgleichrichter geschaltet werden, vorgegeben wird.

Wie oben bereits erläutert wurde, können mehrere Transformatoren des erfindungsgemäßen Hochspannungswandlers bevorzugt mit jeweils einem eigenen Wechselrichter ausgestattet sein. Man kann also Module bilden, jeweils bestehend aus einem Wechselrichter, einem Transformator-Primärsystem, einem Transformator-Sekundärsystem, einem Ausgangsgleichrichter, und einem Ausgangsfilater, welches bevorzugt eine Glättungsdrossel und einen Kondensator enthält.

Speziell mit mehreren derartigen Modulen lassen sich die Bauelemente für die sekundärseitigen Teile für kleinere Spannungen dimensionieren. Man kann die einzelnen Module jeweils für sich in Betrieb nehmen und prüfen, man kann einzelnen Module austauschen.

In einer speziellen Ausführungsform, die sich insbesondere für die Modul-Ausgestaltung der Transformatoren eignet, sieht die Erfindung vor, mehrere (N) Wechselrichter mit gleicher Frequenz, aber mit gegenseitig versetztem Phasenwinkel zyklisch zu takten. Insbesondere ist zwischen den einzelnen Umschaltvorgängen der Wechselrichter ein Phasenwinkel von 360°/N vorgesehen.

Vorzugsweise werden im stationären Betrieb mehrere gleiche Module mit gleicher Taktfrequenz betrieben, wobei die Phasenlage der Ansteuersignale für die Wechselrichter der einzelnen Module auf der Grundlage des Betriebs eines einzigen Moduls festgelegt wird. Ein einziges Modul gibt durch seinen Verlauf des primären Transformatorstroms den Betrieb der übrigen Transformatoren vor (Master-Slave-Prinzip).

Durch die zyklische Taktung mehrerer Wechselrichter mit Signalen gleicher Frequenz, allerdings mit versetzten Phasenwinkeln, läßt sich die Welligkeit (Rippel) des Stroms des Zwischenkreiskondensators und damit die thermische Beanspruchung der Kondensatoren im Zwischenkreis verringern. Das zyklische Durchschalten des Betriebs der einzelnen Wechselrichter läßt sich mit Hilfe des oben bereits erwähnten Master-Slave-Prinzips dadurch bewerkstelligen, daß man an den Ausgang eines Phasenregelkreises eine logische Schaltung anschließt, vorzugsweise über einen Frequenzteiler. Mit einer geeigneten Logikschaltung nach Art eines Ringzählers werden dann zeitlich gestaffelt die Ansteuersignale für die einzelnen (N) Wechselrichter erzeugt. Bei jedem Wechselrichter werden Ausgangssignale und komplementäre Ausgangssignale des Phasenregelkreises als Ansteuersignale verwendet, und zwar während einer halben Periodendauer eines Zyklus (Ausgangssignal) bzw. einer komplementären halben Periode eines Zyklus (komplementäres Ausgangssignal), wobei auf Nicht-Überlappung der zu einem Transformator bzw. einem Wechselrichter gehörigen Signale geachtet wird.

Insbesondere ist vorgesehen, daß der oben erwähnte Frequenzteiler mit einem Teilungsverhältnis TV = 2*N arbeitet (N ist die Anzahl von Transformatoren bzw. Wechselrichtern, die als Modul zu einem Hochspannungswandler zusammengeschaltet sind), wobei dem Frequenzteiler ein Dezimal-Ringzähler nachgeschaltet ist, der von Null bis 2*N - 1 zählt und für jeden Zustand einen separaten Ausgang besitzt.

Beispielsweise sind bei N = 5 Transformatoren und Wechselrichtern zehn Ausgänge des Dezimal-Ringzählers paarweise auf insgesamt fünf RS-Flip-Flops geschaltet, wobei jedes Flip-Flop an seinem Ausgang bzw. an seinem komplementären Ausgang ein Ansteuer- oder Treibersignal bzw. ein komplementäres Ansteuer- oder Treibersignal für einen zugehörigen Wechselrichter liefert.

Um sicherzustellen, daß alle Transformatorabschnitte das gewünschte Potenzial aufweisen, sollen Kerne aus Kernmaterialien mit schlechter elektrischer Leitfähigkeit, z.B. Ferrite, mit einer leitenden Schicht versehen werden, die allerdings den magnetischen Fluß nicht einschließen darf.

Zweckmäßigerweise wird diese leitende Schicht dann so ausgeführt, daß eine gute Isolierung gegenüber der zugehörigen Wicklung (Primärwicklung oder Sekundärwicklung) möglich ist. Die als Potenzialsteuerelektroden fungierenden leitenden Schichten oder bei gut leitenden Kernmaterialien die Kernabschnitte selbst sind über Impedanzen untereinander elektrisch gekoppelt und mit den gewünschten elektrischen Bezugspotenzialen verbunden. Durch diese Maßnahme läßt sich in einfacher Weise die gewünschte Einstellung der Potenzialverhältnisse erreichen, nämlich in dem Sinne, daß zwischen den Potenzialen einer Wicklung und dem Potenzial des zugeordneten Abschnitts des Transformatorkerns eine möglichst geringe maximale Potenzialdifferenz erhalten wird.

Ohne Verwendung zusätzlicher Elemente zur Potenzialsteuerung läßt sich die leitende Schicht auf den Abschnitten des Transformatorkerns in vorteilhafter Weise zur Einstellung der gewünschten Potenzialverhältnisse nutzen, indem man mehrere Transformatoren eines Hochspannungswandlers so anordnet, daß sich durch die kapazitive Wirkung der Potenzialsteuerelektroden die gewünschten Potenzialverhältnisse einstellen.

Im folgenden werden Ausführungsbeispiele der Erfindung anhand der Zeichnungen näher erläutert. Es zeigen:
- Fig. 1: eine Schnittansicht durch einen Transformator für einen erfindungsgemäßen Hochspannungswandler;
- Fig. 2: ein Blockschaltbild einer Ausführungsform eines erfindungsgemäßen Hochspannungswandlers;
- Fig. 3: ein Schaltungsdiagramm für eine mögliche Konfiguration einer Zusammenschaltung von N Transformatoren für einen erfindungsgemäßen Hochspannungswandler;
- Fig. 4: ein Schaltungsdiagramm einer alternativen Ausführungsform einer Zusammenschaltung aus N Transformatoren für einen erfindungsgemäßen Hochspannungswandler;
- Fig. 5: eine Schaltungsskizze einer weiteren alternativen Zusammenschaltung von zwei Transformatoren für einen erfindungsgemäßen Hochspannungswandler mit Spannungsteiler für die Potenzialsteuerung und einer Drossel in jedem Ausgangszweig des Ausgangsgleichrichters;
- Fig. 6: eine Schaltungsskizze eines Hochspannungswandlers mit einem Transformator und den Bauelementen, die die Eigenfrequenz des Leistungskreises bestimmen;
- Fig. 7: eine Schaltungsskizze eines Hochspannungswandlers mit einem Phasenregelkreis zur Ansteuerung des Wechselrichters des Hochspannungswandlers;
- Fig. 8: eine Schaltungsskizze eines N Module aufweisenden Hochspannungswandlers mit einer Master-Slave-Ansteuerlogik für die separaten Wechselrichter der einzelnen N Module;
- Fig. 9: ein detailliertes Schaltbild der in der Mitte in Fig. 8 dargestellten Logik zum Erzeugen von Ansteuersignalen; und
- Fig. 10: ein Impulsdiagramm zum Erläutern des Betriebs der Schaltung nach Fig. 9.

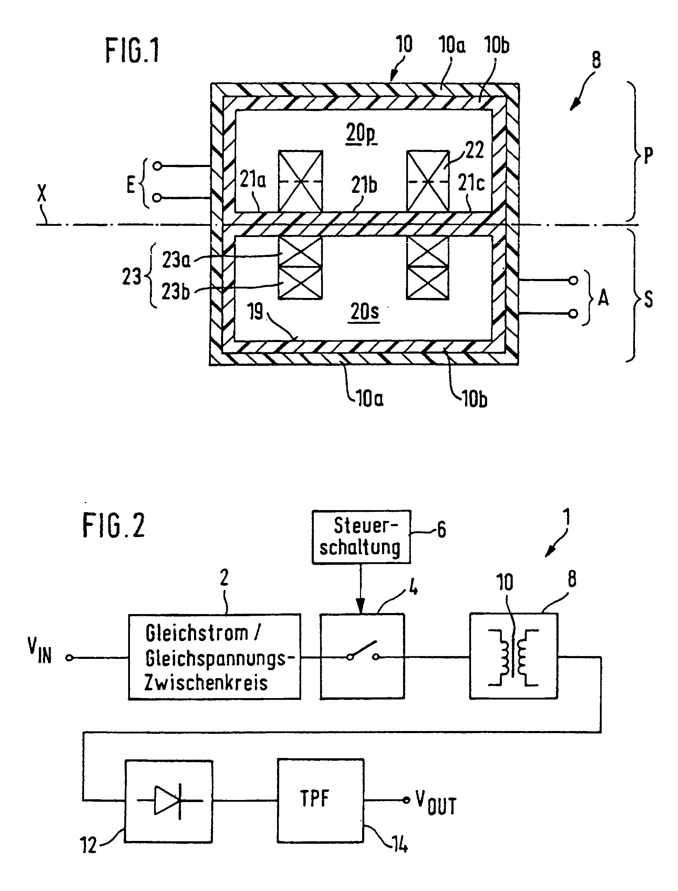

Zunächst soll auf Fig. 2 Bezug genommen werden, die als Blockschaltbild einen Hochspannungswandler gemäß einer bevorzugten Ausführungsform der Erfindung zeigt.

Der in Fig. 2 allgemein mit 1 bezeichnete Hochspannungswandler enthält als Gleichspannungsquelle einen Gleichspannungs-Zwischenkreis 2, der eingangsseitig ein Gleichspannungssignal direkt oder ein Wechselspannungssignal Vin über einen Gleichrichter empfängt und ein Gleichspannungssignal an einen Wechselrichter 4 gibt, der symbolisch als Schalter dargestellt ist, in der Praxis eine Mehrzahl von leistungselektronischen Schaltern enthält. Angesteuert wird der Wechselrichter 4 von einer als Schaltersteuerung fungierenden Steuerschaltung 6.

Der Wechselrichter 4 schaltet das Ausgangssignal des Gleichspannungs-Zwischenkreises alternierend an eine Primärwicklung eines Transformators 8. An die Sekundärseite des Transformators 8 ist ein Ausgangsgleichrichter 12 angeschlossen, dem als Ausgangsfilter ein Tiefpaßfilter 14 nachgeordnet ist, an dessen Ausgang die erhöhte Gleichspannung Vout abgegriffen werden kann.

Der Transformator 8 ist in der in Fig. 1 näher dargestellten Weise ausgebildet, insbesondere sind bei dem Transformator 8 von einem durchgehenden Isolator 10 ein Primärsystem P und ein elektrisch davon isoliertes Sekundärsystem S gebildet.

Wie in Fig. 1 gezeigt ist, ist der Isolator 10 in Form eines Gehäuses ausgebildet, bestehend aus einem den gesamten Transformator 8 umgebenden Außengehäuse 10a aus einem mechanisch stabilen Material, beispielsweise einem harten Kunststoff, und zwei getrennten Innengehäuseteilen 10b aus einem hochisolierendem Material. Die beiden Innengehäuse 10a des Isolators 10 definieren eine imaginäre Trennlinie X, die den gesamten Transformator 8 in das Primärsystem P und das Sekundärsystem S unterteilt, denen über ein Eingangs-Klemmenpaar E Spannung zugeführt bzw. über ein Ausgangs-Klemmenpaar A Spannung abgenommen wird.

Das Primärsystem P enthält einen Transformatorkern-Abschnitt 20p und eine Primärwicklung 22.

Das Sekundärsystem S enthält eine aus zwei Sekundärwicklungsabschnitten 23a und 23b gebildete Sekundärwicklung 23 auf einem sekundärseitigen Transformatorkern-Abschnitt 20s (möglich ist auch eine einzige durchgehende Sekundärwicklung 23).

Wichtiges Element bei dem in Fig. 1 gezeigten Transformator 8 ist der Isolator 10, der den Transformator räumlich und elektrisch in das Primärsystem P und das Sekundärsystem S unterteilt. Die spezielle Art der Ausführung des Isolators 10 ist nicht auf die oben beschriebene Ausführungsform beschränkt. Man kann auch ein völlig anderes Gehäuse vorsehen, man kann auch getrennt voneinander einzelne Isolatorabschnitte zwischen den Unterbrechungen (21a, 21b und 21c)des Transformatorkerns zur Bildung der Abschnitte 20p und 20s vorsehen.

Durch die elektrische und räumliche Trennung des Transformators 8 mit Hilfe des Isolators 10 erhöht sich die Streuinduktivität Lσ des Transformators 8, seine Hauptinduktivität L (Lp, Ls) wird geringer.

Die oben näher erläuterten Vorteile der räumlichen und elektrischen Trennung bzw. Isolierung von Primärsystem P und Sekundärsystem S werden durch die folgende detaillierte Beschreibung von Ausführungsbeispielen verdeutlicht. Durch die räumliche Trennung bedingt, lassen sich die Isolierungen zwischen den einzelnen Wicklungen bzw. Wicklungsabschnitten und den Transformatorkern-Abschnitten andererseits wesentlich einfacher ausführen als bei üblichen Transformatoren. Durch geeignete Beschaltung, wie sie im folgenden näher erläutert wird, wird eine günstige Potenzialsteuerung an den einzelnen Stellen des Transformators erreicht, wobei diese Potenzialsteuerung die maximal möglichen Potenzialdifferenzen auf Werte bringt, die eine vereinfachte Isolierung zwischen Wicklung und Transformatorkern, zulassen.

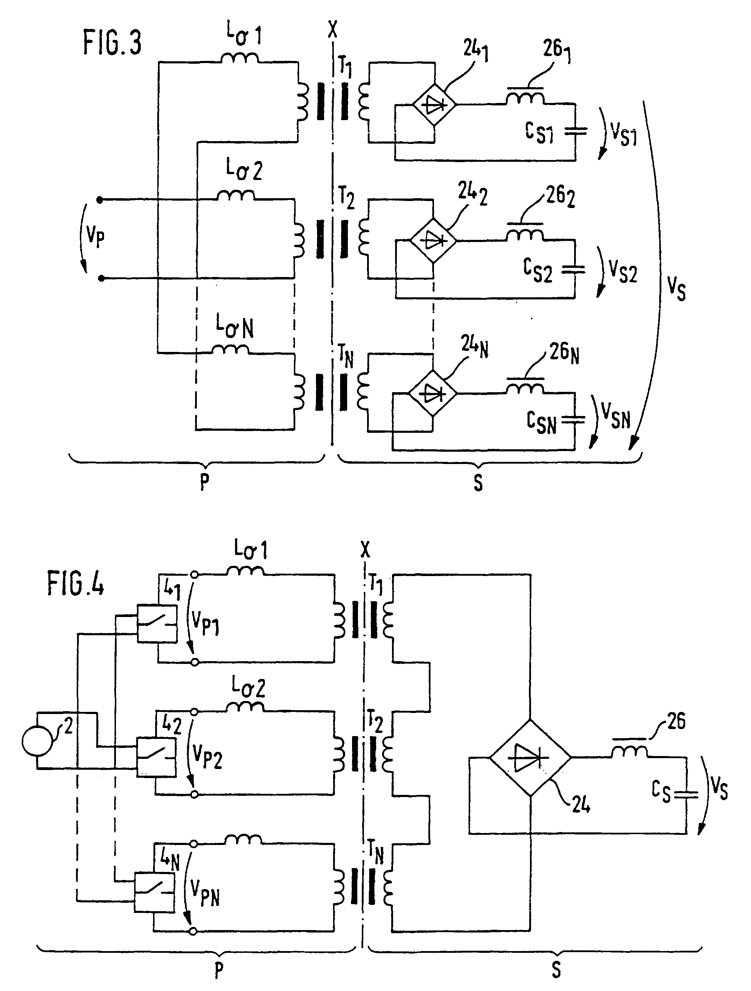

Zunächst soll der in Fig. 3 dargestellte Hochspannungswandler betrachtet werden, wobei primärseitig auf die Darstellung des Wechselrichters 4 und der Steuerschaltung 6 verzichtet wurde. Mögliche Ausgestaltungen für den die Primärspannung Vp liefernden Wechselrichter ergeben sich aus der späteren Beschreibung.

Nach Fig. 3 sind N getrennte Transformatoren der in Fig. 1 gezeigten Bauart vorgesehen. Die einzelnen Transformatoren sind mit T1, T2 .... TN bezeichnet. Die Primärwicklungen der Transformatoren T1 bis TN sind zueinander parallel geschaltet und empfangen jeweils die Primärwechselspannung Vp.

Die Sekundärwicklungen der einzelnen Transformatoren T1 bis TN sind jeweils einzeln auf eine Graetz-Brücke gegeben, wobei jede Graetz-Brücke 24₁, 24₂ .... 24_{N} eine gleichgerichtete Spannung über eine Ausgangsdrossel 26₁ .... 26_{N} an einen zugehörigen Ausgangskondensator Cs1, Cs2, .... CsN gibt. Die einzelnen Kondensatorspannungen Vs1, Vs2 .... VsN summieren sich zur Gesamt-Ausgangsspannung Vs.

Fig. 4 zeigt eine alternative Ausrührungsform, bei der die einzelnen Primärwicklungen von N Transformatoren T1, T2 ... TN jeweils einen eigenen Wechselrichter 4₁, 4₂ .... 4_{N} aufweisen.

Sekundärseitig sind die einzelnen Sekundärwicklungen in Reihe geschaltet. Die Summe der Sekundärspannungen wird von einer Graetz-Brücke 24 über eine Drossel 26 auf einen Kondensator C_{S} gegeben.

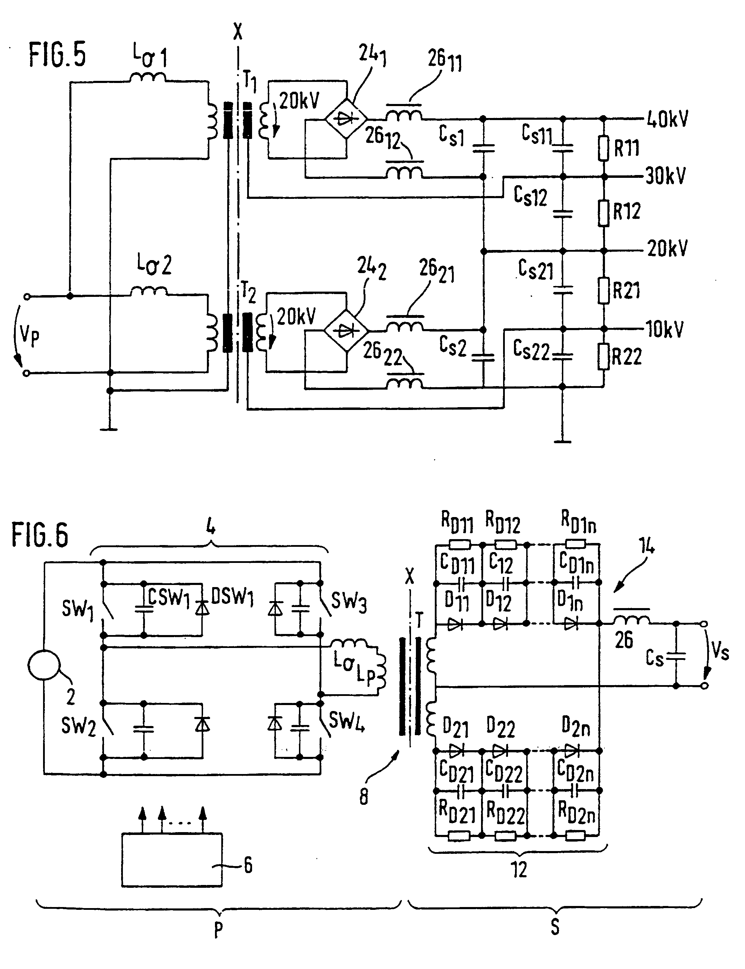

Fig. 5 zeigt einen Teil eines Hochspannungswandlers mit zwei Transformatoren T1 und T2, deren Primärwicklungen parallel geschaltet sind, und deren Sekundärwicklungen jeweils an eine Graetz-Brücke geschaltet sind. Die gleichgerichtete Spannung von jeder Graetz-Brücke 24₁, 24₂ wird über Speicherdrosseln 26₁₁, 26₁₂, 26₂₁, 26₂₂ auf ein Paar Kondensatoren Cs11, Cs12 bzw. Cs21, Cs22 mit gleichen Werten gegeben, wobei zu jedem Kondensator ein Widerstand R11, R12 bzw. R21, R22 mit gleichen Werten parallelgeschaltet ist.

Der Spannungsteiler, bestehend aus den Kondensatoren Cs11 bis Cs22 und den Widerständen R11 bis R22 stellt von Abgriff zu Abgriff jeweils ein Viertel der Ausgangsspannung bereit. Die Potentiale werden mit korrespondierenden Kernabschnitten der Sekundärseiten der aufgetrennten Transformatoren verbunden.

Die Spannung an jeder der Sekundärwicklungen der beiden Transistoren T1 und T2 betragen hier beispielsweise 20 kV. Damit ergibt sich gegenüber Masse oder Erde an dem oberen Belag des Kondensators Cs11 ein Potenzial von 40 kV, am oberen Belag des Kondensators Cs12 ein Potenzial von 30 kV, am oberen Belag des Kondensators Cs21 ein Potenzial von 20 kV, und zwischen den Kondensatoren Cs21 und Cs22 ein Potenzial von 10 kV.

Der sekundärseitige Kernabschnitt des Transformators 1 wird mit 30 kV verbunden, der sekundärseitige Kernabschnitt des Transformators 2 wird mit 10 kV verbunden. Damit muß die Isolierung zwischen der Wicklung und dem zugeordneten Kernabschnitt bei jedem der Transformatoren nur noch für maximal 10 kV ausgelegt werden, wo hingegen die Isolierung beim Transformator T1 ohne vollständige Trennung der Primär- und Sekundärseite und vollständiger Erdung des Kerns, wie in Fig. 5 nur für die Primärseite geschehen, 40 kV standhalten müßte.

Fig. 6 zeigt den schematisch in Fig. 2 dargestellten Hochspannungswandler 1 in größerer Einzelheit. Der an die Gleichspannungsquelle 2 angeschlossene Wechselrichter 4 enthält hier insgesamt vier Transistorschalter, die aus Einzeltransistoren, parallel geschalteten Transistoren oder Transistormodulen bestehen können, symbolisch dargestellt und mit SW1, SW2, SW3 und SW4 bezeichnet. Zu jedem Transistorschalter SW1 .... SW4 gehört eine parasitäre Kapazität, links oben in Fig. 6 mit CSW1 parallel zu dem Schalter SW1 dargestellt, außerdem eine Diode DSW1, parallel zu der Kapazität CSW1 geschaltet. Zusätzlich zu der parasitären Kapazität kann auch noch eine diskrete Kapazität vorhanden sein, die zu der parasitären Kapazität parallelgeschaltet ist. Zur Vereinfachung ist in Fig. 6 nur ein Kondensator CSW1 für den Schalter SW1 dargestellt. Die Verhältnisse bei den übrigen Schaltern SW2, SW3 und SW4 sind die gleichen wie beim Schalter SW1.

Der Transformator 8 weist eine Hauptinduktivität Lp auf der Primärseite bzw. Lₛ₁ und Lₛ₂ auf der Sekundärseite sowie eine Streuinduktivität Lσ auf, wobei Lσ wiederum über primär- und sekundärseitige Anteile verfügt.

Auf der Sekundärseite sind die beiden durch die Sekundärwicklungsanschlüsse 22a und 22b gebildeten Induktivitäten mit einer Mittelanzapfung versehen, wobei dieser Transformator eine weitere Ausführungsform darstellt.

Im Sekundärsystem S befinden sich die Sekundärwicklungen 22a und 22b mit den dazugehörigen Induktivitäten Ls1 bzw. Ls2, der Ausgangsgleichrichter 12 und das daran angeschlossene Tiefpaßfilter mit einer Drossel 26 und einem Ausgangskondensator Cd. Der Ausgangsgleichrichter umfaßt hier in jedem Zweig am Sekundärwicklungs-Abschnitt eine Reihenschaltung aus Dioden D11, D 12 ... D1N in dem oberen Zweig bzw. D21, D22 .... D2N im unteren Zweig.

Parallel geschaltet zu jeder Diode ist jeweils ein Kondensator und ein Widerstand C_{D11} ... bzw. R₁₁ ....

Die Reihenschaltung aus den Dioden dient zur Erhöhung der Spannungsfestigkeit im Ausgangsgleichrichter 12. Die Parallelschaltung aus Kapazität und Widerstand zu jeder Diode dient dem Zweck, die Dioden bezüglich der zu sperrenden Spannung zu symmetrieren. Weiterhin bilden die Kondensatoren mit der Streuinduktivität des Transformators einen Reihenschwingkreis, der ab einer bestimmen Ausgangsspannung einen sinusförmigen Transformatorstrom bewirkt.

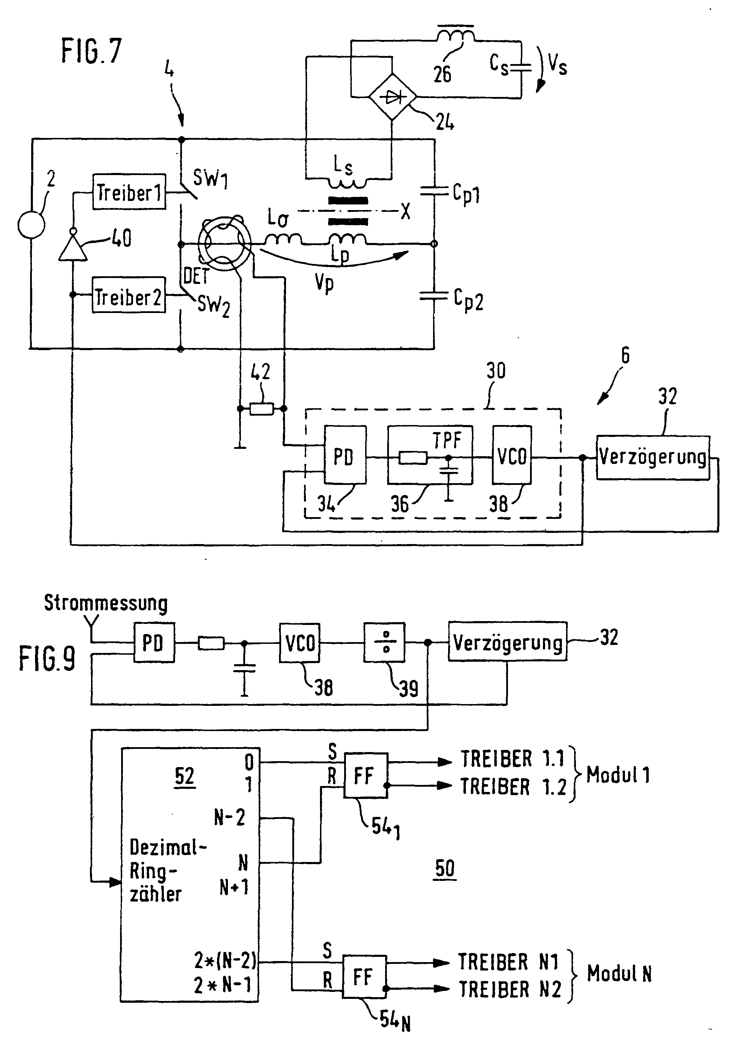

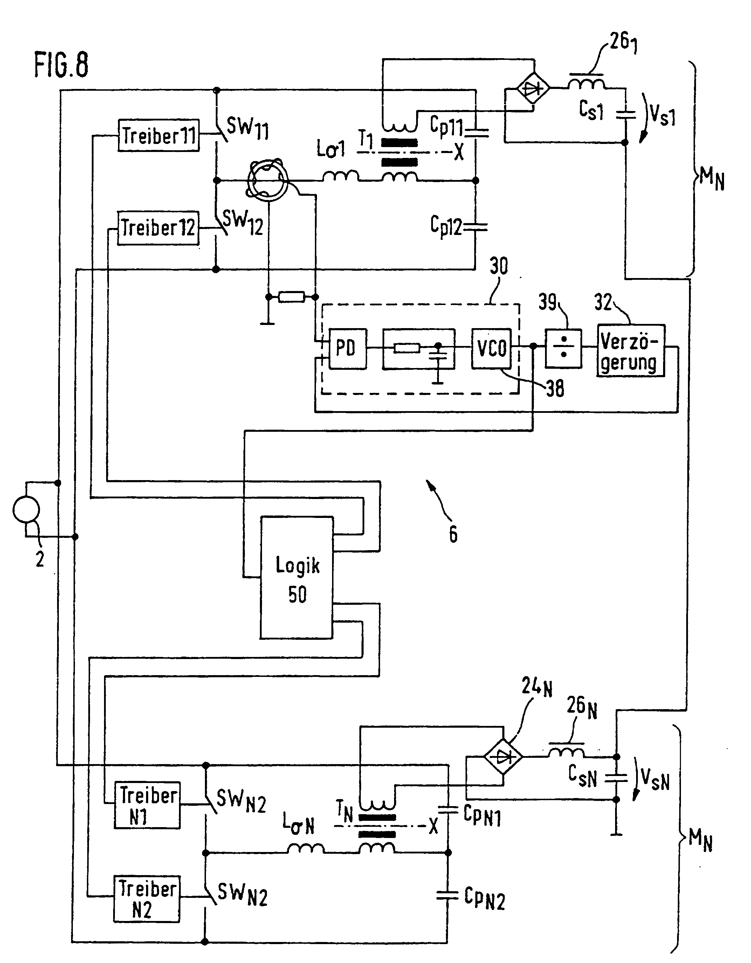

In Fig. 6 ist die Steuerschaltung 6 schematisch als Block dargestellt. Einzelheiten der Steuerschaltung 6 werden unten in Verbindung mit den Fig. 7 und 8 noch näher erläutert. Die Ausgestaltung der Steuerschaltung 6 selbst ist hier für den Fachmann anhand seines Fachwissens möglich, wobei für den speziellen Betriebsablauf die im folgenden erläuterten Gesichtspunkte zu berücksichtigen sind.

Im Sekundärsystem S in Fig. 6 fließt Strom über den Diodenzweig D11 ... D1N bzw. D21 ... D2N in den Ausgangskondensator Cs, und zwar alternierend, wobei jeweils ein Diodenzweig leitet und der andere sperrt, und umgekehrt. Über den gesperrten Diodenzweig mit den dazu parallel geschalteten Kondensatoren baut sich eine annähernd sinusförmige negative Spannung auf, wobei durch die Kondensatoren ein Verschiebestrom fließt. Wenn dieser Verschiebestrom durch die Kondensatoren C_{D11} ... C_{D1n} bzw. C_{D21} ... C_{D2n} eine Stärke erreicht, die der Stärke des in den Ausgangskondensator Cs fließenden Stroms entspricht, wird der Stromfluß durch die bis dahin leitenden Dioden des anderen Diodenzweigs Null. Über diesem nun sperrenden Diodenzweig baut sich nun ebenfalls eine sinusförmige, negative Spannung auf. Die Spannung über dem zuerst gesperrten Diodenzweig erreicht jetzt positive Werte und wird auf die Flußspannung dieses Zweiges geklemmt, wobei gleichzeitig der Strom vom Kondensatorzweig auf den parallelen, vorher gesperrten Diodenzweig kommutiert.

Die Summe aus Dioden- und Kondensatorstrom entspricht - das Übersetzungsverhältnis des Transformators berücksichtigt - dem Verlauf des primärseitigen Transformatorstroms, und damit auch abschnittsweise dem Schalterstrom.

Wird nun der Hochspannungswandler nach Fig. 6 bei konstanter Ausgangsspannung betrieben, so läßt sich bei geeigneter Dimensionierung der Bauelemente erreichen, daß im stationären Betrieb stets sinusförmige Transformatorströme fließen.

In dem Wechselrichter 4 des in Fig. 6 gezeigten Hochspannungswandlers bewirkt die Streuinduktivität Lσ, daß die darin gespeicherte Energie bei jedem Schrittvorgang zu einem Laden und Entladen der Kapazitäten CSW1 ... der Transistorschalter SW1 bis SW4 führt.

Wenn beim Ausschaltvorgang die in der Streuinduktivität Lσ gespeicherte Energie größer ist als die in den Kapazitäten gespeicherte Energie, erfolgt ein vollständiger Umladevorgang, d.h., die zu dem abschaltenden Transistor gehörige Kapazität wird aufgeladen, die zu dem einzuschaltenden Transistor gehörige Kapazität wird entladen. Nach diesem Entladevorgang wird die an diesem Transistor anstehende Spannung auf den Wert der Durchlaßspannung der antiparallel geschalteten Diode geklemmt. Jetzt kann der Einschaltvorgang bei einer Spannung von nahezu Null, und annähernd verlustfrei stattfinden.

Damit die in der Streuinduktivität Lσ gespeicherte Energie groß genug ist, muß der Abschaltvorgang der stromführenden Transistoren weit genug vor dem Stromnulldurchgang erfolgen, oder die Streuinduktivität muß vergrößert werden. Unter Umständen ist auch der Einsatz einer Zusatzinduktivität in Betracht zu ziehen. Daraus ergibt sich auch die Bedingung, daß die Eigenfrequenz des durch die Kapazitäten der Ausgangsgleichrichter 12 und durch die Streuinduktivität gebildeten Schwingkreises kleiner sein muß als die Taktfrequenz, mit dem die Schalter SW1 - SW4 im Wechselrichter 4 angesteuert werden.

Die in Fig. 6 dargestellte Schaltung läßt sich also bei geeigneter Ansteuerung des Wechselrichters 4 und passender Dimensionierung der Bauelemente im Primärsystem P und im Sekundärsystem S im Quasi-Resonanzbetrieb betreiben, der ein verlustfreies Schalten garantiert.

Fig. 7 zeigt eine Ausführungsform eines aus einem Transformator bestehenden Hochspannungswandlers. Von dem Transformator sind die Hauptinduktivität Lp, Ls und die Streuinduktivität Lσ dargestellt. Von dem Wechselrichter 4 sind die beiden Transistorschalter SW1 und SW2 mit zugehörigem Treiber (Treiber 1, Treiber 2) dargestellt. Das Sekundärsystem besteht aus einer Graetz-Brücke 24, einer Drossel 26 und einem Ausgangskondensator Cs.

Die Primärwicklung ist mit einem Anschluß an den Mittelanschluß einer durch die beiden Schalter SW1 und SW2 gebildeten Halbbrücke einerseits und mit dem anderen Anschluß an den Mittelanschluß zweier Kondensatoren Cp1 und Cp2 andererseits angeschlossen. Bei den Schaltern SW1 und SW2 handelt es sich um rückwärts nicht sperrende Transistorschalter, wie sie in dem Wechselrichter 4 in Fig. 6 dargestellt sind.

Rechts unten in Fig. 7 ist die Steuerschaltung 6 dargestellt, die dazu dient, den Wechselrichter 4 (hier in einer gegenüber Fig. 6 abgewandelten Form) anzusteuern. Die Steuerschaltung 6 besteht aus einem Phasenregelkreis 30 mit nachgeschaltetem Verzögerungsglied 32. Der Phasenregelkreis 30 enthält in an sich bekannter Weise einen Phasendetektor (PD) oder Phasenvergleicher 34, an den ein Tiefpaßfilter 36 (RC-Glied) und ein spannungsgesteuerter Oszillator (VCO) 38 angeschlossen sind.

Ein Stromsensor DET erfaßt den durch die Primärwicklung fließenden Strom, der mit einem Widerstand 42 in eine Spannung umgesetzt wird. Die Spannung gelangt an den ersten (oberen) Eingang des Phasendetektors 34. Dessen zweitem Eingang wird das Ausgangssignal des Verzögerungsglieds 32 zugeleitet. Das Ausgangssignal des VCO 38 wird dem Treiber 2 zum Betätigen des Schalters SW2 zugeleitet. Ein Negator 40 invertiert das Signal überlappungsfrei im Flankenbereich. Das invertierte Signal gelangt an den Treiber 1, um den Schalter SW1 zu steuern. Die beiden Signale, die über die Treiber an die Schalter SW1 und SW2 gegeben werden, überlappen sich zeitlich nicht, so daß kein Brückenkurzschluß entsteht.

Mit der in Fig. 7 gezeigten Schaltung läßt sich durch den Stromsensor DET eine genaue Erfassung der Stromnulldurchgänge erreichen. Die Phasenregelschleife 30 bewirkt das zeitrichtige Öffnen und Schließen der Schalter SW1 und SW2, wobei die Verzögerung des Verzögerungsglieds 32 so eingestellt ist, daß der Wechselrichter 4 vor dem Nulldurchgang des Stroms in der Primärwicklung des Transformators umschaltet. Dabei stellt sich eine Schaltfrequenz ein, die höher ist als die Eigenfrequenz des Schwingkreises, der durch die Streuinduktivität des Transformators und die Kondensatoren des Ausgangsgleichrichters gebildet wird.

Durch geeignete Dimensionierung des VCO mit unterer und oberer Eckfrequenz läßt sich erreichen, daß in der Startphase der Strom auf einen Maximalwert begrenzt-wird bzw. das auch bei steigender Eigenfrequenz die Steuerfrequenz oder Taktfrequenz des Wechselrichters immer noch größer ist als die Eigenfrequenz.

Da das Schalten des Wechselrichters 4 durch das Signal am Ausgang des VCO 38 gesteuert wird, erfolgt das Umschalten immer vor dem Stromnulldurchgang, so daß der Wechselrichter stets induktiv arbeitet und sich ein verlustloses Schalten realisieren läßt, wenn man, wie oben ausgeführt, die Verzögerung des Verzögerungsglieds 32 entsprechend dimensioniert.

Fig. 8 zeigt einen aus mehreren (N) Modulen bestehenden Hochspannungswandler, wobei jedes Modul ähnlich aufgebaut ist wie die in Fig. 7 dargestellte Schaltung, jedoch für sämtliche Module 1 .... N nur eine einzige Steuerschaltung 6 vorgesehen ist. Jedes Modul besitzt einen Transformator T ähnlich der in Fig. 1 gezeigten Art, und jeweils mit eigenem Wechselrichter und eigenem Sekundärsystem. Die Ausgangskondensatoren Cs sind in Reihe geschaltet, so daß sich eine Gesamt-Ausgangsspannung entsprechend der Summe der einzelnen Kondensatorspannungen Vs1 .... VsN ergibt.

Der obere Teil der Schaltung nach Fig. 8 ähnelt der Schaltung nach Fig. 7, nur daß dem VCO 38 in dem Phasenregelkreis ein Frequenzteiler 39 nachgeschaltet ist. Der VCO liefert eine relativ hohe Ausgangsfrequenz, die um den Teilungsfaktor TF größer ist als die Eigenfrequenz und gleiche Phasenlage besitzt, an den Frequenzteiler 39, so daß die Einrastfrequenz des Phasenregelkreises 30 relativ niedrig ist im Vergleich zur Ausgangsfrequenz des VCO 38.

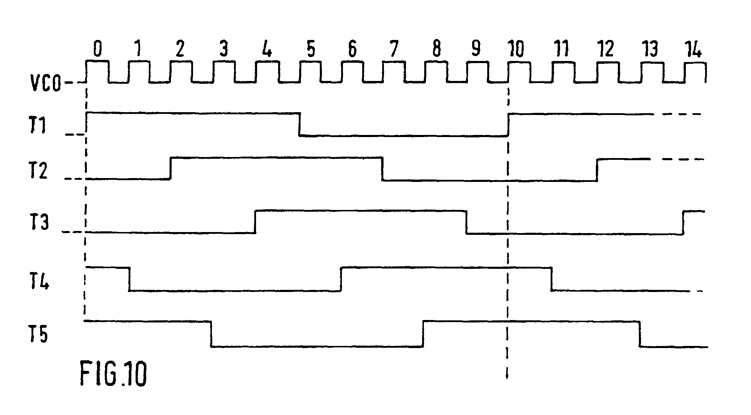

Die relativ hohe Ausgangsfrequenz des VCO 38 wird auf eine Logikschaltung 50 gegeben. Die einen Ringzähler enthaltende und in Fig. 9 näher dargestellte Logikschaltung 50 liefert an N Paaren von Ausgängen Ansteuersignale bzw. komplementäre Ansteuersignale für die Treiber 1.1, 1.2 bzw. 2.1, 2.2 .... N.1, N.2 der N Transformatoren 1 bis N. Damit werden die Wechselrichter 4 sämtlicher Transformatoren T1 bis T5 mit gleicher Frequenz geschaltet, allerdings in der Phase verschoben, und zwar zyklisch derart, daß die Umschaltung mit einer Phasendifferenz von 360°/N erfolgt.

Der in Fig. 8 gezeigte Hochspannungswandler wird also nach dem Master-Slave-Prinzip von der Steuerschaltung 6 gesteuert.

Fig. 9 zeigt die Logikschaltung 50 im einzelnen. Das Ausgangssignal des Frequenzteilers 39 wird auf einen Eingang eines Dezimal-Ringzählers 52 gegeben, der 2*N Ausgänge aufweist, hier numeriert mit 0, 1, 2, ... N - 2 ... N, N + 1, ..., 2*N - 1.

Von Ausgangspaaren (0, N), (1, N + 1) ... gehen Leitungen zum Setzeingang bzw. Rücksetzeingang jeweils eines RS-Flip-Flops 54₁ ... 54_{N}, die an ihrem Ausgang bzw. an ihrem komplementären Ausgang die Ansteuersignale für die Treiber der Module 1 bis N liefern.

Fig. 10 zeigt anhand eines Impulsdiagramms die Treibersignale für die Wechselrichter der Transformatoren T1 bis T5. Die komplementären Treibersignale sind nicht dargestellt, ihr Verlauf ist jedoch aus der Schaltung nach Fig. 9 ersichtlich. Innerhalb von insgesamt zehn Ausgangstaktzyklen des VCO ergibt sich ein einmaliges Einschalten und ein einmaliges Ausschalten für das Schalterpaar SW1, SW2 in jedem Modul 1 - 5 (= N).

## Patentansprüche

1. Hochspannungswandler, umfassend
- eine Gleichspannungsquelle (2); mit
- mindestens einen Wechselrichter mit leistungselektronischen Schaltern (4);
- mindestens einem Transformator (8; T; T1 ... TN) mit
i) mindestens einer Primärwicklung (22),
ü) mindestens einer Sekundärwicklung (23), und
iii) einem Transformatorkern (20p, 20s);
- einer Schaltersteuerung (6) zum Ansteuern des Wechselrichters (4) derart, daß die Gleichspannungsquelle (2) alternierend primärseitig an den mindestens einen Transformator (8; T; T1 bis TN) geschaltet wird;
- mindestens einem Ausgangsgleichrichter, der an die mindestens eine Sekundärwicklung angeschlossen ist, und
- mindestens ein an den Ausgangsgleichrichter (12) angeschlossenes Filter (14);
**dadurch gekennzeichnet,**
**daß** der Transformatorkern (20p, 20s) mehrere Unterbrechungsstellen (21a, 21b, 21c) des magnetischen Wegs aufweist, an denen sich Isolatorabschnitte befinden, daß die durch die Unterbrechungen gebildeten Abschnitte (20p, 20s) des Transformatorkerns zusammen mit zugehörigen Wicklungen (22, 23) oder Wicklungsabschnitten (23a, 23b) von Primär- und Sekundärwicklung potenzialmäßig getrennte Primär- und Sekundärsysteme (P, S) bilden,
**daß** die Energie ohne Zwischenspeicherung im Transformator nach dem Flußwandlerprinzip von dem Primär- auf das Sekundärsystem übertragen wird, und daß dem Ausgangsgleichrichter mindestens eine Speicherdrossel (26) zugeordnet ist, an die sich ein Ausgangskondensator (Cs1, Cs2 ... CsN) anschließt.

2. Hochspannungswandler nach Anspruch 1,
**dadurch gekennzeichnet,**
**daß** zwischen Primär- und Sekundärsystem (P, S) ein durchgehender Isolator (10) angeordnet ist.

3. Hochspannungswandler nach Anspruch 1 oder 2,
**dadurch gekennzeichnet,**
**daß** die Gleichspannungsquelle (2) durch einen über einen Gleichrichter an eine Wechselspannungsquelle gekoppelten Gleichspannungszwischenkreis gebildet wird.

4. Hochspannungswandler nach einem der Ansprüche 1 bis 3 mit mehreren Sekundärwicklungen,
**dadurch gekennzeichnet,**
**daß** die Sekundärwicklungen über eine Mittelanzapfung verfügen und der Ausgangsgleichrichter (12) als Mittelpunktschaltung ausgeführt ist (Fig. 6).

5. Hochspannungswandler nach einem der Ansprüche 1 bis 4,
**dadurch gekennzeichnet,**
**daß** die einzelnen Abschnitte des Transformatorkerns (20b, 20s) mit Bezugspotentialen und über Impedanzen untereinander elektrisch verbunden sind.

6. Hochspannungswandler nach einem der Ansprüche 1 bis 3, mit mehreren Sekundärwicklungen,
**dadurch gekennzeichnet,**
**daß** die Sekundärwicklungen über keine Mittelanzapfung verfügen und der Ausgangsgleichrichter als Graetz-Brücke (24) ausgeführt ist.

7. Hochspannungswandler nach einem der Ansprüche 1 bis 6,
**dadurch gekennzeichnet,**
**daß** der Transformator bzw. die Zusammenschaltung von Transformatoren primärseitig mit einem Anschluß an den Mittelanschluß einer Halbbrücke (SW1, SW2), bestehend aus rückwärts nicht sperrenden, leistungselektronischen Schaltern, und mit dem anderen Anschluß an einen Kondensator (Cp1, Cp2) angeschlossen ist.

8. Hochspannungswandler nach einem der Ansprüche 1 bis 6,
**dadurch gekennzeichnet,**
**daß** der Transformator bzw. die Zusammenschaltung von Transformatoren primärseitig mit jedem Anschluß an den Mittelanschluß je einer Halbbrücke, bestehend aus rückwärts nicht sperrenden, leistungselektronischen Schaltern (SW1 - SW4) geschaltet ist (Fig. 6).

9. Hochspannungswandler nach einem der Ansprüche 1 bis 8,
**dadurch gekennzeichnet,**
**daß** die Streuinduktivität (Lσ) des Transformators zusammen mit den parasitären Kapazitäten (CSW1 ...) der leistungselektronischen Schalter (SW1 bis SW4) und gegebenenfalls diesen Schaltern parallel zugeschalteten Kapazitäten für einen resonanten Betrieb während des Schaltvorgangs eingesetzt wird.

10. Hochspannungswandler nach einem der Ansprüche 1 bis 9,
**dadurch gekennzeichnet,**
**daß** zur Erhöhung der Spannungsfestigkeit pro Zweig jedes Ausgangsgleichrichters (12) mehrere Dioden (D11, D12 ... D1n; D21, D22 ... D2n) in Reihe geschaltet sind.

11. Hochspannungswandler nach einem der Ansprüche 1 bis 10,
**dadurch gekennzeichnet,**
**daß** zu jeder Diode der Ausgangsgleichrichter eine Kapazität (C_{D11}, C_{D12} ...) und ein Widerstand (R11, R12 ...) mit gleichen Werten parallelgeschaltet sind, um die Dioden hinsichtlich der zu sperrenden Spannung zu symmetrieren.

12. Hochspannungswandler nach einem der Ansprüche 1 bis 11,
**dadurch gekennzeichnet,**
**daß** die Streuinduktivität des Transformators (8) mit den Kapazitäten des Ausgangsgleichrichters (12) einen derart abgestimmten Reihenresonanzkreis bildet, daß dessen Eigenfrequenz etwas kleiner ist als die Taktfrequenz des Hochspannungswandlers.

13. Hochspannungswandler nach einem der Ansprüche 1 bis 12, mit mehreren Primärwicklungen innerhalb eines Transformators,
**dadurch gekennzeichnet,**
**daß** die Primärwicklungen parallel oder in Reihe geschaltet sind, und auch eine oder mehrere Sekundärwicklungen einschließen.

14. Hochspannungswandler nach einem der Ansprüche 1 bis 13, mit mehreren Sekundärwicklungen innerhalb eines Transformators,
**dadurch gekennzeichnet,**
**daß** die Sekundärwicklungen parallel oder in Reihe geschaltet sind, wobei mehrere Sekundärwicklungen eine oder mehrere Primärwicklungen einschließen.

15. Hochspannungswandler nach einem der Ansprüche 1 bis 14.
**dadurch gekennzeichnet,**
**daß** die Isolatorabschnitte aus mehreren verschiedenen Materialien (10a, 10b) bestehen.

16. Hochspannungswandler nach einem der Ansprüche 1 bis 15,
**dadurch gekennzeichnet,**
**daß** die Isolatorabschnitte Bestandteile eines Gehäuses sind, daß das Primärsystem (P) und/oder das Sekundärsystem (S) einschließt.

17. Hochspannungswandler nach einem der Ansprüche 15 oder 16,
**dadurch gekennzeichnet,**
**daß** die zum Primärsystem und zum Sekundärsystem gehörigen Bereiche durch eine Wand getrennt sind, und daß die einzelnen Bereiche unabhängig voneinander mit einem isolierenden Gas, einer isolierenden Flüssigkeit oder einem isolierenden Feststoff, insbesondere Pulver, gefüllt sind.

18. Hochspannungswandler nach einem der Ansprüche 1 bis 17,
**dadurch gekennzeichnet,**
**daß** die Steuerschaltung (6) einen Phasenregelkreis (30) aufweist, dessen erstem Eingang ein von dem zeitlichen Verlauf des primären Transformatorstroms abgeleitetes Stromdetektorsignal zugeführt wird, und dessen zweitem Eingang über ein Verzögerungsglied (39) sein Ausgangssignal zugeführt wird und daß die leistungselektronischen Schalter (SW1, SW2) mit dem Ausgangssignal und dem komplementären Ausgangssignal der Phasenregelschleife (30) angesteuert werden.

19. Hochspannungswandler nach einem der Ansprüche 1 bis 18,
**dadurch gekennzeichnet,**
**daß** mehrere Transformatoren primärseitig parallel und sekundärseitig in Reihe geschaltet sind.

20. Hochspannungswandler nach einem der Ansprüche 1 bis 19,
**dadurch gekennzeichnet,**
**daß** mehrere Transformatoren primärseitig parallel geschaltet sind und auf der Sekundärseite jedes Transformators ein eigener Gleichrichter mit jeweils zugeordneter Glättungsdrossel und jeweils zugeordnetem Ausgangskondensator vorgesehen ist, wobei die Ausgangskondensatoren in Reihe geschaltet sind.

21. Hochspannungswandler nach einem der Ansprüche 1 bis 18,
**dadurch gekennzeichnet,**
**daß** die Transformatoren primärseitig jeweils über einen eigenen Wechselrichter (4) verfügen, der an eine gemeinsame Spannungsquelle (2) angeschlossen ist, so daß einzelne Module gebildet werden, jeweils bestehend aus einem Wechselrichter, einem Transformator, einem Ausgangsgleichrichter, einer Glättungsdrossel und einem Ausgangskondensator.

22. Hochspannungswandler nach Anspruch 21,
**dadurch gekennzeichnet,**
**daß** die mehreren (N) Wechselrichter mit gleicher Frequenz, aber um einen vorbestimmten Phasenwinkel versetzt zyklisch getaktet werden.

23. Hochspannungswandler nach Anspruch 22, bei dem die Phasenwinkel für N Wechselrichter gegeneinander um 360°/N versetzt sind.

24. Hochspannungswandler nach Anspruch 22 oder 23,
**dadurch gekennzeichnet,**
**daß** die Taktfrequenz und die Phasenlage der Ansteuersignale aller Module (M1 ... MN) aus dem Verlauf des primären Transformatorstroms eines Moduls (M1) abgeleitet werden.

25. Hochspannungswandler nach Anspruch 24,
**dadurch gekennzeichnet,**
**daß** die Steuerschaltung eine Phasenregelschleife (30) mit ausgangsseitigem spannungsgesteuerten Oszillator (VCO) (38) aufweist, wobei der Phasenregelschleife (30) ein Verzögerungsglied nachgeschaltet ist, und zwischen Phasenregelschleife und Verzögerungsglied ein Frequenzteiler liegt, wobei von dem Ausgangssignal der Phasenregelschleife (30) phasenversetzte Ansteuersignale für die mehreren (N) Wechselrichter abgeleitet werden.

26. Hochspannungswandler nach Anspruch 25,
**dadurch gekennzeichnet,**
**daß** dem Frequenzteiler (39) ein Dezimal-Ringzähler (52) nachgeschaltet ist, der von Null bis 2*N-1 zählt und für jeden Zustand einen separaten Ausgang besitzt, wobei paarweise Ausgänge des Dezimal-Ringzählers auf ein zu jeweils einem Modul (M1 ... MN) gehöriges RS-Flip-Flop geführt sind, deren Ausgänge die Ansteuersignale für die einzelnen Module (M1 ... MN) liefern.

27. Hochspannungswandler nach einem der Ansprüche 1 bis 26,
**dadurch gekennzeichnet,**
**daß** die Abschnitte des Transformatorkerns mit einer leitenden Schicht (19) überzogen sind, die als Potenzialsteuerelektroden fungiert und die mit Bezugspotential und über Impedanzen mit anderen Potentialsteuerelektroden verbunden ist, wobei die leitende Schicht den magnetischen Fluß nicht einschließt.

28. Hochspannungswandler nach Anspruch 27,
**dadurch gekennzeichnet,**
**daß** mehrere Transformatoren so angeordnet sind; daß sich durch die kapazitive Wirkung der Potenzialsteuerelektroden untereinander die gewünschten Potenzialverhältnisse einstellen.

## Claims

1. A high-voltage transformer arrangement, comprising
- a direct voltage source (2); with
- at least one current inverter with power-electronic switches (4);
- at least one transformer (8; T; T1 ... TN) having
i) at least one primary coil (22),
ii) at least one secondary coil (23), and
iii) one transformer core (20p, 20s);
- one switch control (6) for triggering the current inverter (4), such that the direct voltage source (2) is alternately connected on the primary side to the at least one transformer (8; T; T1 to TN);
- at least one output rectifier, which is connected to the at least one secondary coil, and
- at least one filter (14) that is connected to the output rectifier (12);
**characterized in that**
the transformer core (20p, 20s) has several interruption points (21a, 21b, 21c) on the magnetic path where insulation sections are located, that the sections (20p, 20s) formed by the interruptions in the transformer core together with the associated coils (22, 23) or coil sections (23a, 23b) form primary and secondary systems (P, S) that are separated with respect to potential, that the energy is transmitted without buffer storage from the primary to the secondary system, based on the flux converter principle, and that at least one storage choke coil (26) with adjoining output capacitor (Cs1, Cs2 ... CsN) is assigned to the output rectifier.

2. A high-voltage transformer arrangement according to claim 1,
**characterized in that**
a continuous insulator (10) is arranged between the primary and the secondary system (P, S).

3. A high-voltage transformer arrangement according to claim 1 or 2,
**characterized in that**
the direct-voltage source (2) is formed by a direct-voltage buffer circuit, connected via a rectifier to an alternating voltage source.

4. A high-voltage transformer arrangement according to one of the claims 1 to 3, comprising several secondary coils,
**characterized in that**
the secondary coils have a center tap and the output rectifier (12) is designed as center-tap connection (Figure 6).

5. A high-voltage transformer arrangement according to one of the claims 1 to 4,
**characterized in that**
the individual sections of the transformer core (20b, 20s) are electrically interconnected through reference potentials and via impedances to each other.

6. A high-voltage transformer arrangement according to one of the claims 1 to 3, comprising several secondary coils,
**characterized in that**
the secondary coils are not provided with a center tap and the output rectifier is designed as a Graetz bridge (24).

7. A high-voltage transformer arrangement according to one of the claims 1 to 6,
**characterized in that**
the transformer or the interconnected transformers are connected on the primary side with one terminal to the center tap of a half bridge (SW1, SW2), consisting of power-electronic switches that do not block in reverse direction, and with the other terminal to a capacitor (Cp1, Cp2).

8. A high-voltage transformer arrangement according to one of the claims 1 to 6,
**characterized in that**
the transformer or the interconnected transformers are connected on the primary side with each terminal to the center tap of respectively one half bridge, consisting of power-electronic switches (SW1 - SW4), which do not block in reverse direction (Figure 6).

9. A high-voltage transformer arrangement according to one of the claims 1 to 8,
**characterized in that**
for a resonant operation during the switching operation, the stray inductance (Lσ) of the transformer is used together with the parasitic capacitances (CSW1 ...) of the power-electronic switch (SW1 to SW4) and, if necessary, capacitances that are additionally parallel connected to these switches.

10. A high-voltage transformer arrangement according to one of the claims 1 to 9,
**characterized in that**
in order to increase the voltage sustaining capability in each branch of each output rectifier (12), several diodes (D11, D12 ... D1n; D21, D22 ... D2n) are connected in series.

11. A high-voltage transformer arrangement according to one of the claims 1 to 10,
**characterized in that**
a capacitance (CD11, CD12 ...) and a resistance (R11, R12 ...) with the same values are parallel-connected to each output rectifier diode in order to balance the diodes with respect to the voltage to be blocked.

12. A high-voltage transformer arrangement according to one of the claims 1 to 11,
**characterized in that**
the stray inductance of the transformer (8) together with the capacitances of the output rectifier (12) form a series resonant circuit, which is attuned such that its characteristic frequency is somewhat lower than the clocking frequency of the high-voltage transformer arrangement.

13. A high-voltage transformer arrangement according to one of the claims 1 to 12, comprising several primary coils within a transformer,
**characterized in that**
the primary coils are connected parallel or in series and also include one or several secondary coils.

14. A high-voltage transformer arrangement according to one of the claims 1 to 13, comprising several secondary coils within a transformer,
**characterized in that**
the secondary coils are connected parallel or in series, wherein several secondary coils enclose one or several primary coils.

15. A high-voltage transformer arrangement according to one of the claims 1 to 14,
**characterized in that**
the insulator sections are composed of several different materials (10a, 10b).

16. A high-voltage transformer arrangement according to one of the claims 1 to 15,
**characterized in that**
the insulator sections represent components of a housing that encloses the primary system (P) and/or the secondary system (S).

17. A high-voltage transformer arrangement according to one of the claims 15 or 16,
**characterized in that**
the areas belonging to the primary system and the secondary system are separated by a wall and that the individual areas are filled, independent of each other, with an insulating gas, an insulating liquid or an insulating solid material, in particular a powder.

18. A high-voltage transformer arrangement according to one of the claims 1 to 17,
**characterized in that**
the control circuit (6) is provided with a phase-locked loop (30), the first input of which is supplied with a current detector signal derived from the chronological course of the primary transformer current while the second output is fed its output signal via a delay element (39) and that the power-electronic switches (SW1, SW2) are triggered with the output signal and the complementary output signal of the phase-locked loop (30).

19. A high-voltage transformer arrangement according to one of the claims 1 to 18,
**characterized in that**
several transformers are connected parallel on the primary side and in series on the secondary side.

20. A high-voltage transformer arrangement according to one of the claims 1 to 19,
**characterized in that**
several transformers are parallel-connected on the primary side and that on the secondary side of each transformer a separate rectifier with respectively associated smoothing choke and respectively associated output capacitor is provided, wherein the output capacitors are connected in series.

21. A high-voltage transformer arrangement according to one of the claims 1 to 18,
**characterized in that**
each transformer is provided on the primary side with a separate current inverter (4), which is connected to a joint voltage source (2), so that individual modules are formed, which respectively consist of a current inverter, a transformer, an output rectifier, a smoothing choke and an output capacitor.

22. A high-voltage transformer arrangement according to claim 21,
**characterized in that**
the several (N) current inverters are cyclically clocked with the same frequency, but offset by a predetermined phase angle.

23. A high-voltage transformer arrangement according to claim 22, for which the phase angles for N current inverters are offset by 360°/N relative to each other.

24. A high-voltage transformer arrangement according to claim 22 or 23,
**characterized in that**
the clocking frequency and the phase position of the trigger signals for all modules (M1 ... MN) are derived from the course of the primary transformer current of a module (M1).

25. A high-voltage transformer arrangement according to claim 24,
**characterized in that**
the control circuit is provided with a phase-locked loop (30) with voltage-controlled oscillator (VC)(38) on the output side, wherein the phase-locked loop (30) has a downstream-connected delay element and a frequency divider is positioned between the phase-locked loop and the delay element, and wherein phase offset trigger signals for the several (N) current inverters are derived from the output signal of the phase-locked loop (30).

26. A high-voltage transformer arrangement according to claim 25,
**characterized in that**
a decimal ring counter (52) is connected downstream of the frequency divider (39), which counts from zero to 2*N-1 and has a separate output for each state, wherein pairs of the decimal ring counter outputs are respectively conducted to an RS flip-flop belonging to respectively one module (M1 ... MN), the outputs of which supply the trigger signals for the individual modules (M1 ... MN).

27. A high-voltage transformer arrangement according to one of the claims 1 to 26,
**characterized in that**
the transformer core sections are coated with a conducting layer (19), which functions in the manner of potential control electrodes and is connected with reference potential and via impedances to other potential control electrodes, wherein the conducting layer does not include the magnetic flux.

28. A high-voltage transformer arrangement according to claim 27,
**characterized in that**
several transformers are arranged in such a way that the desired potential ratios adjust as a result of the capacitive effect of the potential control electrodes among each other.

## Revendications

1. Convertisseur de haute tension, comprenant
- une source de tension continue (2) ; avec
- au moins un onduleur avec commutateurs électroniques de puissance (4) ;
- au moins un convertisseur (8 ; T ; T1... TN) avec
i) au moins un enroulement primaire (22),
ii) au moins un enroulement secondaire (23), et
iii) un noyau de convertisseur (20p, 20s) ;
- une commande de commutateur (6) pour commander l'onduleur (4) de manière que la source de tension continue (2) soit couplée alternativement côté primaire au ou aux convertisseur(s) (8 ; T : T1 à TN) ;
- au moins un redresseur de sortie qui est relié au ou aux enroulement(s) secondaire(s), et
- au moins un filtre (14) relié au redresseur de sortie (12) ;
**caractérisé**
**en ce que** le noyau de convertisseur (20p, 20s) comporte plusieurs points d'interruption (21a, 21b, 21c) du parcours magnétique, auxquels se trouvent des tronçons d'isolateur, en ce que les tronçons (20p, 20s), formés par les interruptions, du noyau de convertisseur, forment avec des enroulements (22, 23) ou tronçons d'enroulement (23a, 23b) correspondants de l'enroulement primaire et de l'enroulement secondaire des systèmes primaires et systèmes secondaires (P, S) de potentiel séparé, en ce que l'énergie est transmise, sans accumulation intermédiaire dans le convertisseur, suivant le principe du convertisseur de flux, du système primaire au système secondaire, et en ce qu'au redresseur de sortie est associée au moins une bobine d'accumulation (26) à laquelle se raccorde un condensateur de sortie (Cs1, Cs2... CsN).

2. Convertisseur de haute tension selon la revendication 1, **caractérisé en ce qu'**un isolateur (10) continu est disposé entre le système primaire et le système secondaire (P, S).

3. Convertisseur de haute tension selon la revendication 1 ou 2, **caractérisé en ce que** la source de tension continue (2) est formée par un circuit intermédiaire à tension continue couplé, par un redresseur, à une source de tension alternative.

4. Convertisseur de haute tension selon l'une des revendications 1 à 3, comportant plusieurs enroulements secondaires, **caractérisé en ce que** les enroulements secondaires présentent une prise centrale et le redresseur de sortie (12) est réalisé comme circuit médian (fig. 6).

5. Convertisseur de haute tension selon l'une des revendications 1 à 4, **caractérisé en ce que** les différents tronçons du noyau de convertisseur (20p, 20s) sont reliés électriquement à des potentiels de référence et entre eux par des impédances.

6. Convertisseur de haute tension selon l'une des revendications 1 à 3, comportant plusieurs enroulements secondaires, **caractérisé en ce que** les enroulements secondaires ne présentent pas de prise médiane et le redresseur de sortie est réalisé comme pont de Graetz (24).

7. Convertisseur de haute tension selon l'une des revendications 1 à 6, **caractérisé en ce que** le convertisseur ou le groupement de convertisseurs est raccordé par un branchement à la prise médiane d'un demi-pont (SW1, SW2) constitué de commutateurs électroniques de puissance, ne bloquant pas en inverse, et par l'autre branchement à un condensateur (Cp1, Cp2).

8. Convertisseur de haute tension selon l'une des revendications 1 à 6, **caractérisé en ce que** le convertisseur ou le groupement de convertisseur est couplé côté primaire par chaque branchement à la prise médiane d'un demi-pont respectif, constitué de commutateurs électroniques de puissance (SW1-SW4), ne bloquant pas en inverse (fig. 6).

9. Convertisseur de haute tension selon l'une des revendications 1 à 8, **caractérisé en ce que** l'inductance de dispersion (Lσ) du convertisseur avec les capacités parasites (CSW1...) des commutateurs électroniques de puissance (SW1 à SW4) et éventuellement les capacités couplées en parallèle à ces commutateurs, est utilisée pour un fonctionnant résonant pendant la commutation.

10. Convertisseur de haute tension selon l'une des revendications 1 à 9, **caractérisé en ce que** pour augmenter la résistance à la tension par branche de chaque redresseur de sortie 12, on couple en série plusieurs diodes (D11, D12... D1n ; D21, D22... D2n).

11. Convertisseur de haute tension selon l'une des revendications 1 à 10, **caractérisé en ce qu'**à chaque diode des redresseurs de sortie sont couplées en parallèle une capacité (C_{D11}, C_{D12}...) et une résistance (R11, R12...) aux valeurs identiques, afin de rendre symétriques les diodes en ce qui concerne la tension à bloquer.

12. Convertisseur de haute tension selon l'une des revendications 1 à 11, **caractérisé en ce que** l'inductance de dispersion du convertisseur (8) forme avec les capacités du redresseur de sortie (12) un circuit résonant série accordé de manière que sa fréquence de résonance soit légèrement inférieure à la fréquence de rythme du convertisseur de haute tension.

13. Convertisseur de haute tension selon l'une des revendications 1 à 12, avec plusieurs enroulements primaires à l'intérieur d'un convertisseur, **caractérisé en ce que** les enroulements primaires sont couplés en parallèle ou en série et englobent aussi un ou plusieurs enroulements secondaires.

14. Convertisseur de haute tension selon l'une des revendications 1 à 13, avec plusieurs enroulements secondaires à l'intérieur d'un convertisseur, **caractérisé en ce que** les enroulements secondaires sont couplés en parallèle ou en série, plusieurs enroulements secondaires englobant un ou plusieurs enroulements primaires.

15. Convertisseur de haute tension selon l'une des revendications 1 à 14, **caractérisé en ce que** les tronçons d'isolateur sont constitués en plusieurs matériaux différents (10a, 10b).

16. Convertisseur de haute tension selon l'une des revendications 1 à 15, **caractérisé en ce que** les tronçons d'isolateur font partie intégrante d'un boîtier qui enferme le système primaire (P) et/ou le système secondaire (S).

17. Convertisseur de haute tension selon l'une des revendications 15 ou 16, **caractérisé en ce que** les zones faisant partie du système primaire et du système secondaire sont séparées par une paroi et **en ce que** les différentes zones sont remplies indépendamment l'une de l'autre d'un gaz isolant, d'un liquide isolant ou d'une matière solide isolante, en particulier de poudre.

18. Convertisseur de haute tension selon l'une des revendications 1 à 17, **caractérisé en ce que** le circuit de commande (6) comporte un circuit de régulation de phase (30) à la première entrée duquel est envoyé un signal de détection de courant dérivé de la variation dans le temps du courant primaire du convertisseur, et à la deuxième entrée duquel est envoyé, par un organe de temporisation 39, son signal de sortie, et **en ce que** les commutateurs électroniques de puissance (SW1, SW2) sont commandés avec le signal de sortie et le signal de sortie complémentaire de la boucle de régulation de phase (30).

19. Convertisseur de haute tension selon l'une des revendications 1 à 18, **caractérisé en ce que** plusieurs convertisseurs sont couplés côté primaire en parallèle et côté secondaire en série.

20. Convertisseur de haute tension selon l'une des revendications 1 à 19, **caractérisé en ce que** plusieurs convertisseurs sont couplés côté primaire en parallèle et sur le côté secondaire de chaque convertisseur est prévu son propre redresseur avec bobine de lissage respective associée et condensateur de sortie respectif associé, les condensateurs de sortie étant couplés en série.

21. Convertisseur de haute tension selon l'une des revendications 1 à 18, **caractérisé en ce que** les convertisseurs disposent chacun côté primaire de leur propre onduleur (4) qui est raccordé à une source de tension (2) commune, de sorte que des modules individuels sont formés, chacun étant constitué d'un onduleur, d'un convertisseur, d'un redresseur de sortie, d'une bobine de lissage et d'un condensateur de sortie.

22. Convertisseur de haute tension selon la revendication 21, **caractérisé en ce que** les plusieurs N onduleurs sont rythmés à la même fréquence, mais déphasés cycliquement d'un angle de phase prédéterminé.

23. Convertisseur de haute tension selon la revendication 22 dans lequel les angles de phase pour N onduleurs sont déphasés l'un par rapport à l'autre de 360°/N.

24. Convertisseur de haute tension selon la revendication 22 ou 23, **caractérisé en ce que** la fréquence de rythme et la position de phase des signaux de commande de tous les modules (M1.. MN) sont dérivées de l'allure du courant primaire du convertisseur d'un module (M1).

25. Convertisseur de haute tension selon la revendication 24, **caractérisé en ce que** le circuit de commande comporte une boucle de régulation de phase (30) avec oscillateur (VCO) (38) commandé en tension côté sortie, en aval de la boucle de régulation de phase (30) étant couplé un organe de temporisation, et entre la boucle de régulation de phase et l'organe de temporisation se trouvant un diviseur de fréquence, des signaux de commande déphasés étant dérivés du signal de sortie de la boucle de régulation de phase (30), pour les plusieurs N onduleurs.

26. Convertisseur de haute tension selon la revendication 25, **caractérisé en ce qu'**en aval du diviseur de fréquence (39) est couplé un compteur annulaire décimal (52) qui compte de zéro à 2*N-1 et possède pour chaque état une sortie séparée, des sorties du compteur annulaire décimal étant reliées deux par deux à un flip-flop (RS) faisant partie d'une module (M1... MN) respectif dont les sorties fournissent les signaux de commande des différents modules (M1...MN).

27. Convertisseur de haute tension selon l'une des revendications 1 à 26, **caractérisé en ce que** les tronçons du noyau de convertisseur sont recouverts d'une couche conductrice (19) qui sert d'électrode de commande de potentiel et qui est reliée avec potentiel de référence et par des impédances à d'autres électrodes de commande de potentiel, la couche conductrice n'enfermant pas le flux magnétique.

28. Convertisseur de haute tension selon la revendication 27, **caractérisé en ce que** plusieurs convertisseurs sont disposés de manière **en ce que** les conditions de potentiel voulues s'établissent du fait de l'action capacitive réciproque des électrodes de commande de potentiel.
